# EUROPEAN PATENT APPLICATION

(11) **EP 3 287 430 A1**
(43) Date of publication of application: **28.02.2018**
(21) Application number: 17184893.0
(22) Date of filing: 04.08.2017
(51) Int. Cl.: C04B 41/91, B22C 9/18

(54) **A METHOD OF MACHINING A CERAMIC**

(30) Priority: 22.08.2016 GB 201614263
(71) Applicant: Rolls-Royce plc, London SW1E 6AT (GB)
(72) Inventor: Irwin, Steven, Derby, Derbyshire DE24 8BJ (GB); Welch, Stewart, Derby, Derbyshire DE24 8BJ (GB)
(74) Representative: Rolls-Royce plc

(57) **Abstract**

Described is a method of machining a ceramic component, comprising: providing a porous ceramic component which is to be machined; providing a lubricant which has a viscosity suitable for penetrating the ceramic component; exposing the ceramic component to the lubricant such that it penetrates the ceramic component; increasing the viscosity of the lubricant such that it remains within the component after the exposing step and machining the ceramic component.

## Description

### TECHNICAL FIELD OF THE INVENTION

This invention relates to a method of machining a ceramic material. In particular, the method relates to ceramics which may be used in an investment casting process.

### BACKGROUND OF THE INVENTION

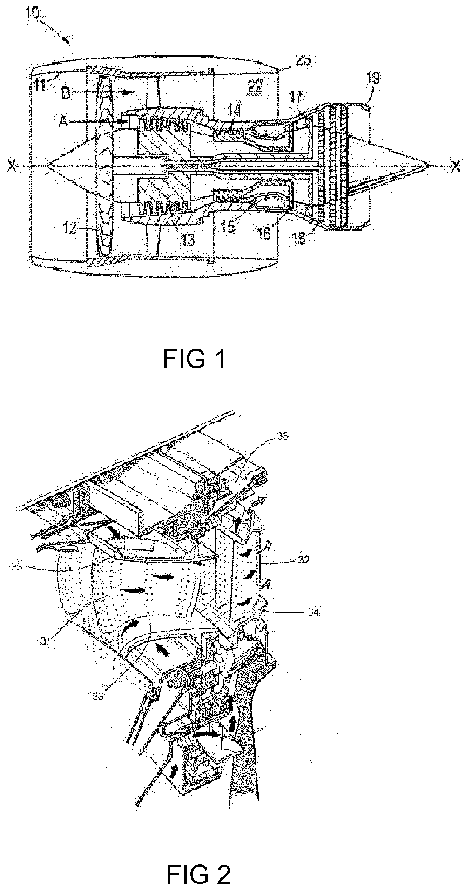

With reference to Figure 1, a ducted fan gas turbine engine generally indicated at 10 has a principal and rotational axis X-X. The engine comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core engine exhaust nozzle 19. A nacelle 21 generally surrounds the engine 10 and defines the intake 11, a bypass duct 22 and a bypass exhaust nozzle 23.

The gas turbine engine 10 works in a conventional manner so that air entering the intake 11 is accelerated by the fan 12 to produce two air flows: a first air flow A into the intermediate pressure compressor 13 and a second air flow B which passes through the bypass duct 22 to provide propulsive thrust. The intermediate pressure compressor 13 compresses the air flow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines respectively drive the high and intermediate pressure compressors 14, 13 and the fan 12 by suitable interconnecting shafts.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

Figure 2 shows an isometric view of a typical single stage cooled turbine in which there is a nozzle guide vane in flow series with a turbine rotor. The nozzle guide vane includes an aerofoil 31 which extends radially between inner 32 and outer 33 platforms. The turbine rotor includes a blade mounted to the peripheral edge of a rotating disc. The blade includes an aerofoil 32 which extends radially outwards from an inner platform. The radially outer end of the blade includes a shroud which sits within a seal segment 35. The seal segment is a stator component and attached to the engine casing. The arrows in Figure 2 indicate cooling flows.

The NGVs, turbine blades and seal segments will typically all be made from an investment casting process which is generally well known in the art. Investment casting or lost-wax casting is a well-known manufacturing technique in which a low melting point material, such as wax, is used to produce a replica of the component to be cast. The wax part is coated with a ceramic shell before being removed to leave a hollow ceramic shell for the receipt of molten metal.

A well-known adaptation to the basic investment casting process is to include a ceramic core within the wax part. The ceramic core remains within the ceramic shell once the wax has been removed and is there to provide a cavity, such as a cooling passageway or chamber, within the cast metallic part.

Investment casting is used in the aerospace industry to produce turbine blades amongst other components. Typically, a ceramic core defining internal cooling passages is provided within a wax coating having the external shape of a turbine blade. This is then invested within a ceramic shell and the wax removed. Once the metal is cast within the shell, the ceramic core is removed from within the metal blade to leave internal cooling passages.

One of the main benefits of investment casting generally, and particularly within the aerospace industry, is that it allows complex near-net parts to be produced with a minimal amount of post-cast processing. In order to maximise this, it can be beneficial to machine the ceramic cores prior to them being covered with wax.

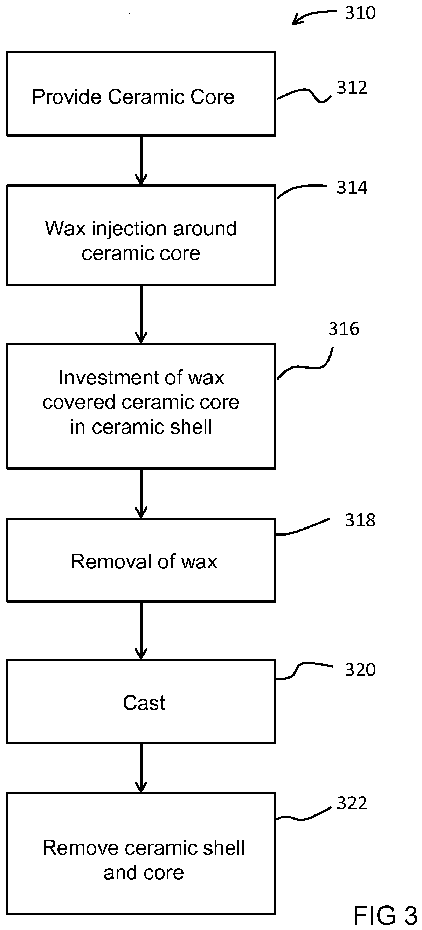

A typical investment casting method for a turbine stage component is shown in Figure 3 at 310. The first step involves the forming of the ceramic core 312. This is typically achieved by injecting a ceramic paste into a mould under pressure (or pouring into moulds (slip casting) or additive manufacture processes), the mould having the shape of the internal cavities or passages required within the cast component. The moulded ceramic is left to solidify before being fired in an oven to harden the ceramic core. Once fired, the ceramic core is placed within a second mould which has an internal shape which corresponds to the external shape of the component, e.g. a turbine blade.

Molten wax is injected into the second mould under pressure 314 to surround the ceramic core and provide a wax replica of the component to be cast. Because the wax is injected under pressure the ceramic core can be placed under a substantial level of stress and strain which can reposition portions of the ceramic core relative to itself and the mould. Hence, it is known to carry out one or more intermediary steps to strengthen the core so that it can withstand the thermal and mechanical shock induced by the injection of the wax. Such a process may include the bulk application of wax or another medium to bridge adjacent portions of the core to bind them together and provide some additional rigidity. Such portions may, for example, be the adjacent sections of a serpentine core which provide internal flow passages in the final cast product. Another process may include impregnating a porous ceramic core with a substance, such as a phenolic resin, PVA, urea or the like, to strengthen the component.

Once the molten wax has been injected and solidified, the composite wax component, consisting of the ceramic core and wax outer, is removed from the second mould and repeatedly dipped in ceramic slurry and stucco to provide a layered shell suitable for receiving the molten metal within 316. The ceramic shell is dried and the wax removed 318 using an appropriate method. This may involve heating the wax, or using a suitable solution to dissolve it. The solution may be water used in a steam autoclave, or firing at high temperature.

The ceramic shell is fired prior to the introduction of molten metal and casting of the part 320. Once solidified, the ceramic shell is removed from the outer of the metallic part, typically mechanically and the inner ceramic core is leached out using an appropriate solution 322.

The cast metallic component will then typically undergo a plurality of further manufacturing steps depending on the component and its end use. The manufacturing steps may include surface machining, finishing or coating and various inspection procedures.

In many instances it would be generally advantageous to machine the ceramic cores prior to encapsulating them in the wax so that additional features which are not or cannot otherwise be readily incorporated into the ceramic cores can be provided. Further, dimensional control can also be improved. However, machining of ceramic materials typically results in extremely high wear rates of the cutters due to the abrasive nature of the ceramic materials which equates to high cost and limits the commercial attractiveness, and the brittle nature of the ceramics can prove difficult to machine.

Cutter life can be extended by using lubricating materials and this can help to reduce machining costs and improve machining rates. Generally, the use of lubricating materials (also known as cutting fluids and coolants) to enhance machining processes is well understood and may include oils, oil and water emulsions, pastes, gels, aerosols, and air or other gases depending on the material to be machined. Benefits of lubricating materials include temperature control, maximisation of the cutting tool life, improvements in the speed of manufacture, ability to remove material from the cutting area. The application of lubricating materials to the cutter and/or work piece is usually by means of flooding, direct jetting, misting or spraying. However, many ceramic materials (in particular porous ceramic materials) are particularly prone to chipping and cracking during machining due to the brittle nature of the materials. Machining of porous ceramics is therefore not common place due to the difficulties in obtaining defect free parts.

The invention seeks to provide a method of preparing a ceramic component so that it can be more readily machined.

### SUMMARY

The present invention provides a method of preparing a ceramic component according to the appended claims.

A method of preparing a ceramic component may comprise: providing a porous ceramic component which is to be machined; providing a lubricant which has a viscosity suitable for penetrating the ceramic core; exposing the ceramic core to the lubricant such that it penetrates the ceramic core; increasing the viscosity of the lubricant such that it remains within the component after the exposing step. Once prepared, the ceramic core may be machined.

Providing a lubricant which is permeated throughout the ceramic component using the method of the invention eases the machining of the component. Machining ceramic components can provide benefits such as optimising the dimensional control or allowing components to be prototyped or made more readily from blocks of ceramic or oversized components to allow a reduction in development time.

The lubricant may be a wax. The wax may be an investment casting wax. The investment casting wax may be suitable for an injection moulding process. The wax may be an unfilled pattern wax. Hence, the wax may not contain significant levels of or any shrinkage reducing additives such as cross-linked polystyrene. The lubricant may be a thermosetting or thermoplastic material. The thermoplastic or thermosetting material may include one or more lubricant increasing components. The lubricant may be an ethylene vinyl acetate, EVA, phenolic resins, urea formaldehyde, polyvinyl alcohol or a suitable epoxy resins. The lubricant may include an organic resin.

The method may comprise heating the lubricant to lower the viscosity such that it can flow into the pores of the ceramic core. The temperature the lubricant needs to be raised to will be dependent on the material. However, a typical temperature for a wax based lubricant will be between 55 and 100 degrees centidrage.

Exposing the ceramic core to the wax lubricant may include dipping the ceramic core into the low viscosity lubricant. The dipping may be achieved by lowering the component into a vessel of low viscosity lubricant. The vessel may be a heated vessel. The dipping may be carried out over a predetermined amount of time. The dipping may include insertion, soak and withdrawal phases. The duration of each of the phases may be between 1 second and 10 minutes depending on the size of the pores, the dimensions of the ceramic, the viscosity of the lubricant and the ambient pressure of the lubricant.

The ceramic component may be machined using an abrasive or cutting tool.
The method may further comprise heating the ceramic core after the machining to remove the lubricant. Alternatively, the lubricant may remain within the component for use in an application of the ceramic component. For example, where the component is to be used in an investment casting process, the impregnated lubricant may help to strengthen the ceramic component for the injection of a soluble material. The soluble material may be the same as the lubricant.

Hence, the method may further comprise: investing the ceramic core in a soluble material. The soluble material may be a wax to provide a composite component. The composite component may be a core. The core may be for a gas turbine engine part. The part may be one of a turbine blade, vane or end wall such as a seal segment.

The soluble material may be applied in an injection moulding process. The composite core may be invested in a ceramic shell. The lubricant may be removed from the ceramic shell.

The congealing point of the lubricant may have a range between 55 to 60 and 70 to 75 degrees.

The viscosity of the lubricant at the congealing point may be between 0.6 and 0.9 Pa.s. The lowered viscosity of the lubricant in penetrating condition may be between 0.05 to 0.35 Pa.s.

The method may further comprise machining the component. The method may include exporting the component for machining.

The machining may include a cutting or abrasive process which creates a local increase in the temperature of the area being cut.

The machining may be carried out in an ambient temperature of between 6 degrees and the melting or congealing point of the lubricant. The machining may be carried out at room temperature.

A core for an investment casting process is described. The core may include a ceramic component having at least one machine surface. The core may be held within a ceramic shell. The core may for part of a composite core which includes a sacrificial component which at least partially surrounds the core.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only, with reference to the Figures, in which:
**Figure 1** is a longitudinal section schematic of a gas turbine engine;
**Figure 2** is a perspective view of a typical high pressure turbine stage;
**Figure 3** is flow diagram indicating the manufacturing steps in a typical investment casting process;
**Figure 4** is a flow diagram showing the machining process of the invention.

### DETAILED DESCRIPTION

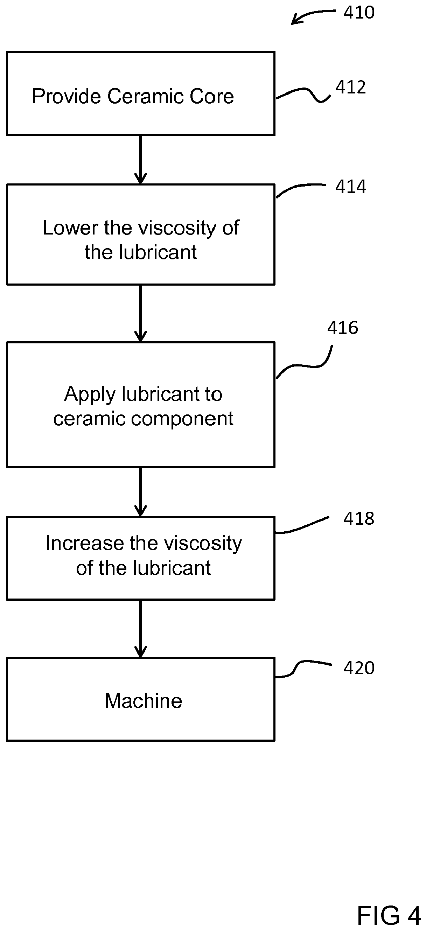

The invention provides a ceramic component in which there is provided an integral lubricant permeated through the core so that machining of the ceramic component melts the lubricant locally to provide lubrication at the cutting surface. Figure 4 shows a method of machining a ceramic component according to the invention. The method 410 involves the provision of a ceramic component 412, lowering the viscosity of a lubricant 414, dipping the ceramic component into the low viscosity lubricant 416, solidifying the impregnated ceramic component 418 so as to solidify the lubricant, and machining the ceramic component 420.

The ceramic component may be suitable for a casting process, or any other. In one example, the ceramic component may be a ceramic core used in an investment casting process. The ceramic core may be one which forms an internal feature of a turbine stage component. The turbine stage component may be an aerofoil or seal segment. The aerofoil may be that of a nozzle guide vane, or a turbine blade. The turbine stage may be a high pressure turbine stage. The ceramic core may provide internal passageways or cavities within a cast component.

The ceramic component may be formed in any suitable way but will typically be formed via an injection moulding process. The injection moulding process may include the provision of a suitable mould having a predetermined shape. The predetermined shape may correspond to the internal cavities or passageways of a turbine stage component. Alternatively, the ceramic can be provided as a block of material or a near net shape part which is machined to provide the final ceramic component. The ceramic component may be manufactured locally to the other steps of the manufacturing method, or may be manufactured elsewhere, for example within another jurisdiction, and provided at a site where the ceramic component is to be prepared for machining.

The ceramic component may be made from any suitable material but will need to be porous enough to allow impregnation of the penetrating lubricant. The ceramic may be made from materials such as silica, alumina, zirconia, yttria or others suitable alternatives used in the industry.

The porosity of the ceramic can be between 15% and 50%, or more preferably between 25% and 35%, depending on the materials used. Typical mean pore diameters may range between 0.1 and 100 microns, or more preferably between 0.1 and 10 microns.

The lubricant may be any suitable lubricating material that can permeate the ceramic material. In one example, the lubricant is a wax-based material in the form of a paraffin based wax with one or more additives to provide the requisite properties. Such additives may include alternative waxes, resins and polymers as are well known in the art of investment casting waxes.

The lubricating material is not limited to wax-based materials and could include other organic-based materials or organic material/lubricant hybrid systems that simultaneously offer a lubricating or lubricating and mechanical benefit. These may include thermoplastic materials that have a low viscosity when molten such as ethylene vinyl acetate, EVA, for example. Other lubricants may include thermosetting or thermoplastic substances. Such substances may include phenolic resins, urea formaldehyde, polyvinyl alcohol and some epoxy resins. It will be appreciated that some of these proposed lubricants are not conventionally considered to be lubricants. However, they may provide a necessary level of lubrication. Typically, such thermosetting or thermoplastic substances may be required to have their viscosity lowered to allow impregnation into the core. The skilled person will be aware of suitable thinning agents. For example, PVA may be thinned with water to provide impregnation. Once impregnated, the water may be allowed to evaporate.

The lubricant may include lubricant enhancing materials such as superfine particles of graphite or molybdenum disulphide.

Suitable waxes may be so-called 'unfilled' waxes which are typically used in conventional investment casting processes as described above. Unfiled waxes are well known in the art and in contrast to filled waxes in that the latter include a filler, such as cross-linked polystyrene particles, which helps reduce shrinkage. Such fillers may inhibit impregnation of the wax into the ceramic core, hence the requirement for unfilled.

It is likely that any unfilled wax will work as the lubricant but optimisation of the composition will be beneficial with the exact formulation of the lubricant being dependent upon the desired attributes for a given application. For a paraffin based wax there are known additives which may be added to get the requisite properties. The additives typically do one or more of increase the mechanical strength, change the melting range and alter the viscosity at a particular temperature. The additives are selectively combined on the basis of inherent characteristics such that the addition of a first element may improve a desired property, such as the mechanical strength when solidified, but result in an undesired effect such as an increase in the melt viscosity. A further additive can then be selected to reduce the viscosity whilst minimising changes to the mechanical strength. The use of additives for changing waxes in this way is well-known and results in multi-component formulations but which are achievable through moderate trial and error.

There is the option of lowering the temperature of the component prior to machining to provide a further optimising parameter. The temperature drop will be around 10-15 degrees below room temperature. A limit to the lowering of the temperature may be the embrittlement of the wax at lower temperatures.

The viscosity of the lubricant is reduced so that it can flow into the pores of the ceramic material of the component. The reduction in viscosity may be achieved by heating a suitable quantity of relatively high viscosity material. The material may be solid such that it is not free flowing at room temperature. Providing a material which is solid at room temperature provides further mechanical support for the ceramic whilst not in direct contact with the cutter.

The heating may be done in a suitable receptacle such as a conventional heated bath which has the facility to heat the wax to above the congealing point or melting point. The hearted temperature may be in the range of between 60 degrees and 100 degrees centigrade.

The application of the lubricant may be achieved by immersing the ceramic component in the low viscosity lubricant. The immersion may be conveniently done by dipping the ceramic core into the heated low viscosity lubricant. So, for example, the ceramic core may be dipped into the heated bath whilst the wax is in a molten condition. It will be appreciated that the permeation of the lubricant will be dependent on a number factors and which will determine the duration of the dip. To further improve the permeation of the lubricant, the ceramic component may also be pre-heated before being immersed in the lubricant. The pre-heating may be achieved in an oven, or with a heat lamp of the like. Pre-heating the ceramic may aid the penetration of the lubricant and reduce the time required for the dip. However, it will be appreciated that this is an additional, optional step which may not be required.

Once the lubricant has impregnated the ceramic component, the component is removed from the reservoir of low viscosity lubricant to increase the viscosity such that it is retained within the pores of the component. Where the component is withdrawn from an immersion tank such as the aforedescribed heated bath, the rate of withdraw may be controlled to prevent the lubricant flowing out of the pores. Hence, withdraw may be spread over several seconds or minutes.

An additional step of removing excess lubricant may be useful which the lubricant accumulates on the surface of the component.

Once the lubricant has solidified, the ceramic component is prepared for machining.

The machining of the ceramic may involve any process in which material is removed by a process of abrasion or cutting and surface heating sufficient to melt the locally impregnated lubricant occurs. The machining may involve the loading of the component into an appropriate jig or vice. Typically, a ceramic will be machined using a rotating cutter such as a milling machine.

Once machining is complete, the ceramic component can be heated to remove the remaining lubricant prior to subsequent processing steps. The removal of the lubricant may be before or after the ceramic component is incorporated into a larger investment casting mould. For example, where the ceramic component is to be used in an investment casting process and enveloped by a sacrificial body material, the lubricant may remain in the ceramic component for the application of the sacrificial component. This is particularly advantageous where the sacrificial body material is removed in the same way as the lubricant. Hence, once the ceramic shell has been formed around the sacrificial body material and ceramic core component, there is only need for a single removal process. In one example the sacrificial body material and lubricant are a similar type of material, e.g. a water soluble product. In another example, the sacrificial body material and lubricant are a wax based product. The sacrificial body material and lubricant may be the same material.

In one example, the core material has a silica content greater than 60%, Zircon in range 0-40%, Alumina in range 0 - 25%. The lubricant is a paraffin based wax with additions of micro-crystalline waxes, resins and polymers which provide the desired strength from the lubricant. The wax is melted at approximately 70 degrees Centigrade at which point the viscosity is in the range of between 0.05 to 0.35Pa.s (Pascal second). The ceramic is dipped for a predetermined time which can range of 30s to 15 minutes depending on the dimensions of the ceramic component, size of the pores and viscosity of the wax, before cooling to room temperature to increase the viscosity.

The machining will obviously depend on the required finished product and whether it is being machined from a near net shape object or block of ceramic.

It will be understood that the invention is not limited to the embodiments described above and various modifications and improvements can be made without departing from the appended claims. For example, the ceramic component may not be used in an investment casting process and may be applied to any cast component, even when used in an investment casting process. Further, the ceramic component may be not be intended for use in a casting process. The invention could be used to provide a rapid prototyping facility of a ceramic material where a shape is machined out of a ceramic block. Hence, the invention is not limited to aerospace or gas turbine engine applications. Except where mutually exclusive, any of the features may be employed separately or in combination with any other features and the disclosure extends to and includes all combinations and sub-combinations of one or more features described herein.

## Claims

1. A method of machining a ceramic component, comprising:
providing a porous ceramic component which is to be machined;
providing a lubricant which has a viscosity suitable for penetrating the ceramic component;
exposing the ceramic component to the lubricant such that it penetrates the ceramic component;
increasing the viscosity of the lubricant such that it remains within the component after the exposing step; and,
machining the ceramic component.

2. A method as claimed in claim 1, wherein the lubricant is a wax.

3. A method as claimed in claim 1 or claim 2, further comprising heating the lubricant to lower the viscosity such that it can flow into the pores of the ceramic component.

4. A method as claimed in claim 3, wherein exposing the ceramic component to the lubricant includes dipping the ceramic component into the low viscosity lubricant.

5. A method as claimed in any preceding claim, further comprising machining the ceramic component using an abrasive or cutting tool.

6. A method as claimed in claim 5, further comprising heating the ceramic component after the machining to remove the lubricant.

7. A method as claimed in any preceding claim, wherein the congealing point of the lubricant is between 60 and 70 degrees.

8. A method as claimed in any preceding claim, wherein the viscosity at the congealing point is between 0.6 and 0.9 Pa.s.

9. A method as claimed in claim 1, wherein the lubricant includes a thermosetting or thermoplastic resin.

10. A method as claimed in any preceding claim, wherein the machining creates a local increase in the temperature of the area being cut.

11. A method as claimed in claim 10, wherein the machining is carried out in an ambient temperature of between 6 degrees centigrade and the congealing point of the lubricant.

12. A method as claimed in any of the preceding claim wherein the porosity of the ceramic is between 15% and 50%.

13. A method as claimed in any of claims 2 to 12 wherein the penetrating viscosity is between 0.05 and 0.35 Pa.s.

14. A method as claimed in any preceding claim, wherein the pore size is between 0.1 and 100 microns.
